# EUROPEAN PATENT SPECIFICATION

(11) **EP 0 925 899 B1**
(45) Date of publication and mention of the grant of the patent: **12.06.2002**
(21) Application number: 98105035.4
(22) Date of filing: 19.03.1998
(51) Int. Cl.: B29C 44/34, B01J 19/18, B01J 19/20, C08J 9/20

(54) **Apparatus and method for producing foamed styrene resin beads**
Vorrichtung und Verfahren zum Herstellen von Schaumstoffperlen aus Styrolharz
Appareil et procédé pour produire de perles de mousse en résine styrénique

(30) Priority: 26.12.1997 KR 7480597
(43) Date of publication of application: 30.06.1999
(73) Proprietor: Shinho Petrochemical Co. Ltd., Kunsan-si, Chunrabuk-do (KR)
(72) Inventor: Hwang, Gyu Eok, Yangchunku, Seoul (KR)
(74) Representative: Weber, Dieter, Dr.

(56) References cited:
- EP-A- 0 488 025
- WO-A-97/08231
- DE-A- 3 524 830
- DE-C- 19 548 515
- GB-A- 1 175 262
- US-A- 3 657 162
- US-A- 3 679 651
- US-A- 4 525 485
- US-A- 5 580 503

## Description

### Field of the Invention

The present invention relates to an apparatus and a method for producing foamed styrene resin beads, comprising the means of carrying out the prepolymerization prior to the main polymerization, effectively cooling the resin beads in conjunction with the aging effect, facilitating the cleansing effect by using the force of movement of the resin beads, and finally removing the moisture from the resin beads prior to the drying process. The use of said apparatus with the means as set forth above in sequence results improved efficiency of the overall production line. More particularly, the invention herein relates to an apparatus and a method for producing foamed styrene resin beads with high productivity, which yields even particles with the target size, reduces the energy consumption during said production, and significantly shortens the reaction cycle as compared to that in the prior art.

### Background of the Invention

In general, the apparatus for producing a foamed styrene resin beads consists of several tanks containing the pure water, styrene monomer, or the additives, respectively, the cooling and heating means, a bath for polymerizing said materials, the tank for washing-out the impurities attached on the particles, a centrifuge for removing the water moiety, and a hot-air dryer.

The process for preparing the resin beads by use of such an apparatus can be summarized as follows:

The pure water, styrene monomer and the additives supplied from the respective tanks are introduced into the bath and reacted at the pre-determined temperature, and for a predetermined time period, an amount of resin beads reacted are cooled in the polymerization bath, and then introduced into the separate tank to wash out the impurities attached on the beads.

Furthermore, after washing, the water is removed out by way of a centrifuge, whilst drying the beads completely by hot-air dryer, then, finally through the step of binding the products by the desired unit volumes, the foamed styrene resin is produced.

However, since if the products are not aged for a certain period of time after being produced by the internal foaming process, the physical properties of the products are degraded, hence it is essential for the products to be aged at least for 60 to 90 days in the refrigerator room, etc.

Nevertheless, conventional apparatus for preparation of the foamed styrene resin beads have several disadvantages, in which there needs a considerable time period required for the reaction as well as for the cooling step because all the respective reactants are introduced in one bath in a quantity, while the warming step and the cooling step are performed, i.e. one-batch style, therefore, it is difficult to control the size of the resin particles, the size of particles having a wide distribution to the undesirable extent. Since the cleaning water containing HCI is used in the washing step, there results in contamination of the water for operation as well as achieving only an insufficient cleansing effect.

In particular, since the styrene resin beads essentially needs to be aged for a long time after the preparation process in order to enhance the value of the products, the method using an apparatus of the prior art was predominantly disadvantageous with respect to the competitiveness of the products.

In other words, since a considerable time period is required in the reaction and/or cooling steps as well as in the aging steps according to the prior methods, the competitiveness of the products therefrom is inevitably lowered, and it was also not effective in terms of the productivity because the sizes of the product particles are predominantly distributed within a range that the consumers do not desire.

WO-A-9708231 describes a continuous process for bead-form expandable styrene polymers resulting in pearls with a narrow pearl size distribution and a low remaining styrene content, in which the styrene is first prepolymerized in bulk to a conversion of 10 to 80%. The prepolymerized styrene is then dispersed in liquid form in an aqueous phase in the presence of suspension stabilizers in a dynamical mixer, which can be a screw feeder, i. e. a simple transporting and mixing means. The prepolymerized styrene is transported through the screw feeder to a main polymerization reactor, wherein it is finally polymerized in an aqueous suspension to a residual styrene content of less than 2000 ppm.

### SUMMARY OF THE INVENTION

Therefore, the present invention is designed to solve such problems in the prior arts, and it is an object of the invention to provide an apparatus for the preparation of foamed styrene resin beads with the higher competitiveness of the products, comprising a means for prepolymerization, a reaction means with the screw-feeder and a main reaction means, wherein the step-by-step reactions are carried out sequentially through the means, and after the reaction is ended, the products are maintained at a suitable temperature by passing through a cooling means in the swing manner and/or a washing means in the impact-shower manner, and wherein, when being dried through the dehumidifier, the temperature of the products is reduced to the lowest level as possible in order to keep the optimum physical properties of the resin, whereby being able to easily control the sizes of the resin beads as well as to yield the beads with the desired size, without any need of a separate step of aging treatment, and the productivity being increased by both saving the energy needed in the process and shortening the reaction cycle, and the products with the improved physical properties such as impact-resistance, rigidity, insulating property, foaming property, etc. being produced.

### BRIEF DESCRIPTION OF THE DRAWINGS

In order that the invention may be clearly understood, reference is now made to the preferred embodiments illustrated hereinafter and figures, in which:
Figure 1 is a schematic view of the overall construction of the apparatus for producing foamed styrene resin according to the present invention.
Figure 2 is a schematic view of a polymerization bath of the apparatus for producing foamed styrene resin according to the present invention.
Figure 3 is a schematic view of a cooling circulator of the apparatus for producing foamed styrene resin according to the present invention.
Figure 4 is a cross-sectioned view of a cooling circulator of the apparatus for producing foamed styrene resin according to the present invention. Figure 5 is a schematic view of a cleaning drum screen of the apparatus for producing foamed styrene resin according to the present invention.

### DETAILED DESCRIPTION OF THE INVENTION

According to claim 1 of the present invention, an apparatus for producing foamed styrene resin beads is provided, in which it comprises:
a) a prepolymerization bath;
b) a main polymerization bath with a heating means and a circulating water cooling means;
c) a dispersing tank with heating or cooling means and with agitating means upstream and connected to the main polymerization bath;
d) a pure water tank with temperature controlling means upstream and connected with the dispersing tank and the main polymerization bath;
e) a styrene monomer tank upstream and connected to the prepolymerization bath and the main polymerization bath;
f) a screw feeder reactor positioned between the prepolymerization bath and the main polymerization bath;
g) a foaming agent tank upstream and connected to the main polymerization bath;
h) a multi-bended double pipe cooling circulator downstream and connected to the main polymerization bath;
i) a drum cleaning means with a motor driven drum screen and with an injection nozzle downstream and connected to the multi-bended double pipe cooling circulator;
j) a slurry storage tank with agitator downstream and connected to the drum screen;
k) a centrifuge and/or a dehumidifier upstream a hot-air drier.

In a preferred embodiment of the present invention in the apparatus for producing foamed styrene resin beads the heating or cooling means equipped to the dispersing tank is constructed in such manner that a pipe surrounds at least five times along the interior wall of the tank, with the inlet and the outlet being positioned to the exterior thereof, and is able to heat or cool the mixtures in the tank by selectively supplying the steam or the cold water through the pipe.

In another preferred embodiment of the present invention in the apparatus for producing foamed styrene resin beads the cooling circulator has a double pipe structure being able to exchange heat between the interior pipe and the exterior pipe by arranging several linear pipes to the same direction with a predetermined distance to each other, one end part of a linear pipe being connected to an end part of a rounded pipe having the same diameter, the other end part of the rounded pipe being again connected to an end part of a former linear pipe, while the other end part of a linear pipe being connected to an end part of another rounded pipe also having the same diameter, the other end part of the rounded pipe being again connected to an end part of a latter linear pipe, whereby said several linear pipes and said rounded pipes being connected for fluid communication, and the respective linear pipes finally being surrounded by the corresponding number of exterior pipes which are also connected to each other, the diameter of which are bigger than those of interior pipes.

In another preferred embodiment of the present invention in the apparatus for producing foamed styrene resin beads the drum cleaning means has several screw fans, and comprises the drum screen being able to be rotated by a motor, with the guidance of a guide roller; several injecting nozzles injecting the pure water over the said drum screen; and a sealing cover and a frame containing and supporting all of them.

Claim 5 of present invention further provides a method for producing foamed styrene resin beads, comprising the steps of
a) heating pure water to about 70 °C in a pure water tank and supplying the water to a dispersing tank and a main polymerization bath;
b) supplying a certain amount of styrene monomer from a styrene monomer tank to a prepolymerization bath and a main polymerization bath;
c) supplying a foaming agent from a foaming agent tank to the main polymerization bath;
d) heating the water and the additives to 70 to 90 °C and premixing them in the dispersing tank, and introducing the mixture into the main polymerization bath;
e) polymerizing an amount of styrene monomer with the additives in the prepolymerization bath for the first time to the conversion ratio of 5 -10%;
f) polymerizing the reactants from the prepolymerization bath in a screw feeder reactor positioned between the prepolymerization bath and the main polymerization bath for a second time to the conversion ratio of 7 -20%;
g) supplying the water, the additives and the styrene monomer from the pure water tank, the dispersing tank and the styrene monomer tank, respectively, and the prepolymerized reactants from the screw feeder reactor to the main polymerization bath and having them react with each other at 70 to 90 °C and react again at 110 to 135 °C to the conversion ratio of 99.80%;
h) cooling and ageing the reacted resin beads from the main polymerization bath in a cooling circulator at the temperature below 20 °C by the use of cold water;
i) washing out the impurities attached on the surface of the resin beads in a drum cleaning means with pure water injected from an injection nozzle;
j) storing the cleaned resin beads in a slurry storage tank to the temperature below 15 °C while agitating them;
k) removing the water and/or the moisture from the beads using a centrifuge and/or a dehumidifier; and
I) dehumidifying and/or drying the beads at the temperature below 30 °C in a hot-air drier by use of hot-air.

For a better understanding of the present invention, references made to the following description and its scope will be pointed out in the appended claims.

### DESCRIPTION OF THE PREFERRED EMBODIMENT

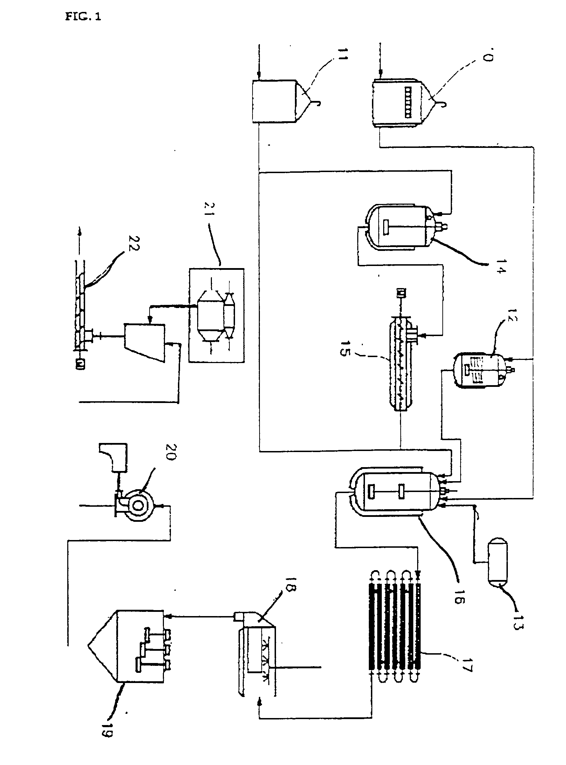

Figure 1 is an schematic view of the overall apparatus for producing foamed styrene resin according to the present invention.

The apparatus for producing foamed styrene resin beads according to the present invention comprises: a pure water tank 10 for supplying the pure water for a dispersing tank 12 and a main polymerization bath 16;
a styrene monomer tank 11 for supplying the styrene monomer; a foaming agent tank 13 for supplying the foaming agent for the main polymerization bath 16;
a dispersing tank 12 for supplying the additives; a prepolymerization bath 14 for prepolymerizing the styrene monomer with the additives;
a screw feeder reactor 15; a main polymerization bath 16 as a main reactor; a cooling circulator 17 for cooling and aging the resin beads;
a drum screen 18 for cleansing; a slurry storage tank 19 for storing the resin beads; a centrifuge 20; and a dehumidifier 22.

The said pure water tank 10 supplies the pure water for a dispersing tank 12 and a main polymerization bath 16.

The pure water tank 10 is equipped with a warming means for preheating the pure water to be introduced into the main polymerization bath to 50 -70 °C, in order to reduce the time required to the reaction cycle.

The styrene monomer tank 11 containing an amount of styrene monomer supplies a predetermined amount of styrene monomer sequentially for the prepolymerization bath 14 and the main polymerization bath 16.

In the dispersing tank 12, the water, the dispersants, the dispersing adjutants, the sizing agents for the resin beads, etc. are mixed by the agitating means, with being heated to 70 -90 °C, and then the mixtures are introduced into the main polymerization bath 16.

When the additives are directly introduced to the main polymerization bath 16, they are hardly dissolved due to being much less than the amount of the total reactants, they may be homogeneously mixed in the dispersing tank 12 and then introduced to the main polymerization bath 16, in order to achieve the dispersing effect of the additives to be distributed in the reactants.

The foaming agents tank 13 supplies the foaming agents for foaming the resin to the main polymerization bath 16, and the time point to introduce the foaming agents is when the conversion rate arrives at 94% in the main polymerization reaction.

The prepolymerization bath 14 having a similar structure to the main polymerization bath 16 polymerizes an amount of the styrene monomer and the various additives from the styrene monomer tank 11 at 60 °C, to achieve a conversion rate of 5 -10%, prior to the main polymerization.

The screw feeder reactor 15 is a pre-reactor equipped to connect the prepolymerization bath 14 with the main polymerization bath 16, with the semi-polymerized material having a conversion rate of 5i-10% from the prepolymerization bath 14, and also supplies the semi-polymerized material having a conversion rate of 20% for the main polymerization bath 16.

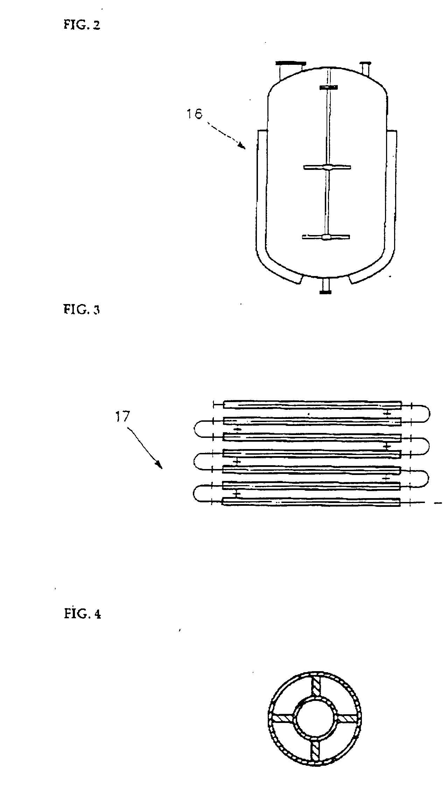

As seen in the Fig. 2, the main polymerization bath 16 is in the form of a sealed tank with a agitator having at least three screw fans and the heating and/or cooling means.

The heating and/or cooling means of the invention consist of the polymerization bath and the jacket covering the inner wall of the polymerization bath with a spacing between therein in order to selectively supply hot or cold circulating water, with the result of heating and/or cooling the reactants in the bath by heat transfer of the interior wall of the bath.

The polymerized reactants from the screw feeder reactor 15, the pure water of 50 -70 °C from the pure water tank 10, a certain amount of the styrene monomer from the styrene monomer tank 11 and the mixed additives from the dispersing tank 12 are introduced into the main polymerization bath 16.

In the main polymerization bath 16, the reaction is carried out by two steps, in which the first step is carried out at 70 -90 °C and the agitating rate is depending on the size of the particles; and the second step is carried out at 110 -135 °C, in the presence of the foaming agents, under the inert gas.

A conversion rate in the main polymerization bath 16 is 99.80%, and the reacted resin beads are cooled to 70 °C in its place.

The cooling circulator 17 is a cooling means for refrigerating the reacted resin beads to be kept below 20 °C.

For such refrigeration, as seen from the Fig 3, the cooling circulator 17 forms a structure in which a pipe having a predetermined length is bended several times, like a zig-zag shape, the inlet and the outlet being connected to the main polymerization bath 16 and the drum screen 18, respectively, in order to keep a sufficient distance for the beads to flow for a desired time. In addition, as seen from the Fig 4, an another pipes through which the coolant, e.g. the cold water flows is positioned concentrically around the said pipe, that is, in the shape of double piping. Thus, during the period that the resin beads flows along the interior pipe, there can be a heat exchange with the coolant, to loss the heat, resulting in the desired temperature of the resin beads kept.

The resin beads pass through the cooling circulator 17 for a certain time period while keeping the temperature below 20 °C, therefore, the interior cell of the resin beads becomes even in sizes, with completely excluding additional aging period.

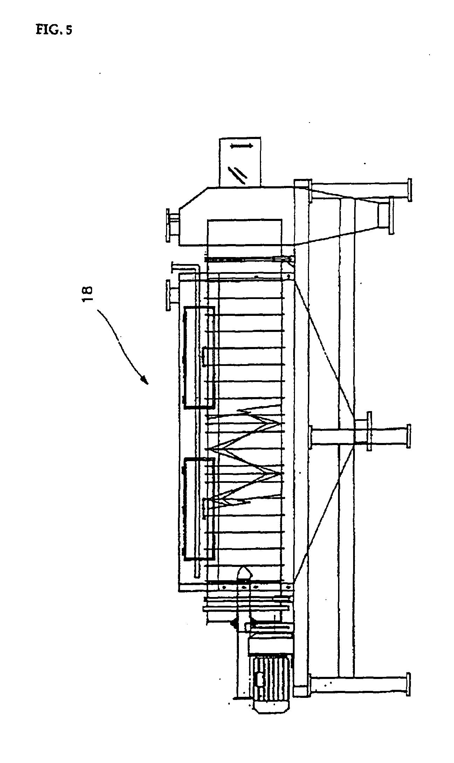

As seen from Fig. 5, the said drum screen 18 as a washing means for the purpose of enhancing the melt-adhesive property and providing a smooth surface, has several screw fans, and comprises a cylindrical drum rotated by the driving motor; an injecting nozzle positioned over the drum; a sealing type cover and a frame covering and supporting the above elements.

In the drum screen 18, the impurities are removed from the surface of the resin beads by cleansing the cooled beads from cooling circulator with the pure water injected from the nozzle.

Since the resin beads proceeds along the route provided by the screw with impacting each other, and are subjected with the washing force of the pure water, the method of the invention can achieve much higher cleansing effects compared to the prior art, in which the beads are stirred in the cleansing liquid. And the washing process can continuously proceed, so that the continuation and automation of the process may be possible.

The slurry storage tank 19 as a cooling bath keeps the cleaned resin beads below the temperature of 15 °C with agitating.

The centrifuge 20 is a means for dehumidifying as much moisture contained in the resin beads as possible, prior to the drying step.

In particular, the apparatus according to the invention are equipped with an additional dehumidifying system 21 which dehumidifies the dehumidified resin beads once more, and by using the system 21, the foaming agent is prevented from leaking out from the resin beads with drying temperature below 30 °C.

The dehumidifier/dryer 22 is a means for completely excluding the moisture from the resin beads, resulting in the end products having a desired particle size.

Hereinafter, according to the invention, the process for preparation of the foamed styrene resin beads is described in more detail.

The process for preparation of the foamed styrene resin beads according to the invention include adding various additives depending on the reaction steps, such as the pre-reaction step, the screw feeder reaction step and the main reaction step, the main reaction step being divided into two stage reaction depending on the temperature.

The composition in the prepolymerization step comprises styrene monomer, the flame-retardant, the flame-retardant adjuvant, and the cross-linking agents to be polymerized at a conversion rate of 5-10%, and with an aromatic hydrocarbon chain-transfer agents added in the screw feeder reactor, the polymerization proceeds at a conversion rate of 7-20%, and then the mixtures are introduced into the main polymerization bath.

The amount of the pure water introduced for the first time into the main polymerization bath is the same as the styrene monomer.

The pure water introduced into the main polymerization bath is preheated to 50-70 °C by heating tank in order to shorten the reaction cycle.

Also, the water, the dispersing agents, the dispersing-adjuvant, and the sizing agents are added with heating to 70-90 °C.

The mixture is introduced and an amount of the styrene monomer is also introduced into the main polymerization bath.

In addition, the polymerized reactants from the screw feeder reactor are introduced into the main polymerization bath with increasing the temperature to 70-90 °C for 30 to 60 minutes.

The reaction in the main polymerization bath consists of two stages, the first stage being carried out between 70-90 °C, the second stage being carried out between 110-135 °C, and when the temperature is increased from the first stage to the second stage, the foaming agents and the inert gas is introduced at the same time with the desired pressure.

The inert gas serves to permeate the foaming agent, etc. into the resin beads.

After reaction, the resin beads are passed through the cooling circulator to reduce the reaction cycles.

The resin beads passed through the cooling circulator is washed with the pure water for 20-30 minutes via a drum screen in order to improve melt-adhesive, impact-resistance, strength, etc. of the beads, and then agitated under the temperature below 15 °C.

In particular, the apparatus according to the invention is equipped with the additional dehumidifying system 21 which dehumidifies the dehumidified resin beads once more, and by using the system 21, the foaming agent is prevented from leaking out from the resin beads with drying temperature below 30 °C.

The beads produced through the above steps of the invention do not need an additional aging step, and have a stable storage property without a leak-out of the foaming agents, a good foaming property, etc.

As described above, the invention provides various advantages, as follows: that is, the method of the invention can achieve much higher cleansing effects compared to the prior art; the washing process can be continuously proceeded, so that the continuation and automation of the process may be possible; the beads do not need an additional aging step, and have a stable storage property without a leak-out of the foaming agents, a good foaming property, etc.

## Claims

1. An apparatus for producing foamed styrene resin beads, comprising:
a) a prepolymerization bath (14);
b) a main polymerization bath (16) with a heating means and a circulating water cooling means;
c) a dispersing tank (12) with heating or cooling means and with agitating means upstream and connected to the main polymerization bath (16);
d) a pure water tank (10) with temperature controlling means upstream and connected with the dispersing tank (12) and the main polymerization bath (16);
e) a styrene monomer tank (11) upstream and connected to the prepolymerization bath (14) and the main polymerization bath (16);
f) a screw feeder reactor (15) positioned between the prepolymerization bath (14) and the main polymerization bath (16);
g) a foaming agent tank (13) upstream and connected to the main polymerization bath (16);
h) a multi-bended double pipe cooling circulator (17) downstream and connected to the main polymerization bath (16);
i) a drum cleaning means (18) with a motor driven drum screen and with an injection nozzle downstream and connected to the multi-bended double pipe cooling circulator (17);
j) a slurry storage tank (19) with agitator downstream and connected to the drum screen (18);
k) a centrifuge (20) and/or a dehumidifier (21) upstream a hot-air drier (22).

2. The apparatus for producing foamed styrene resin beads according to claim 1, wherein the heating or cooling means equipped to the dispersing tank (12) is constructed in such manner that a pipe surrounds at least five times along the interior wall of the tank, with the inlet and the outlet being positioned to the exterior thereof, and is able to heat or cool the mixtures in the tank by selectively supplying the steam or the cold water through the pipe.

3. The apparatus for producing foamed styrene resin beads according to claim 1, wherein the cooling circulator (17) has a double pipe structure being able to exchange heat between the interior pipe and the exterior pipe by arranging several linear pipes to the same direction with a predetermined distance to each other, one end part of a linear pipe being connected to an end part of a rounded pipe having the same diameter, the other end part of the rounded pipe being again connected to an end part of a former linear pipe, while the other end part of a linear pipe being connected to an end part of another rounded pipe also having the same diameter, the other end part of the rounded pipe being again connected to an end part of a latter linear pipe, whereby said several linear pipes and said rounded pipes being connected for fluid communication, and the respective linear pipes finally being surrounded by the corresponding number of exterior pipes which are also connected to each other, the diameter of which are bigger than those of interior pipes.

4. The apparatus for producing foamed styrene resin beads according to claim 1, wherein the drum cleaning means (18) has several screw fans, and comprises the drum screen being able to be rotated by a motor, with the guidance of a guide roller; several injecting nozzles injecting the pure water over the said drum screen; and a sealing cover and a frame containing and supporting all of them.

5. A method for producing foamed styrene resin beads, comprising the steps of
a) heating pure water to about 70 °C in a pure water tank (10) and supplying the water to a dispersing tank (12) and a main polymerization bath (16);
b) supplying a certain amount of styrene monomer from a styrene monomer tank (11) to a prepolymerization bath (14) and a main polymerization bath (16);
c) supplying a foaming agent from a foaming agent tank (13) to the main polymerization bath (16);
d) heating the water and the additives to 70 to 90 °C and premixing them in the dispersing tank (12), and introducing the mixture into the main polymerization bath (16);
e) polymerizing an amount of styrene monomer with the additives in the prepolymerization bath (14) for the first time to the conversion ratio of 5 -10%;
f) polymerizing the reactants from the prepolymerization bath (14) in a screw feeder reactor (15) positioned between the prepolymerization bath (14) and the main polymerization bath (16) for a second time to the conversion ratio of 7 -20%;
g) supplying the water, the additives and the styrene monomer from the pure water tank (10), the dispersing tank (12) and the styrene monomer tank (11), respectively, and the prepolymerized reactants from the screw feeder reactor (15) to the main polymerization bath (16) and having them react with each other at 70 to 90 °C and react again at 110 to 135 °C to the conversion ratio of 99.80%;
h) cooling and ageing the reacted resin beads from the main polymerization bath (16) in a cooling circulator (17) at the temperature below 20 °C by the use of cold water;
i) washing out the impurities attached on the surface of the resin beads in a drum cleaning means (18) with pure water injected from an injection nozzle;
j) storing the cleaned resin beads in a slurry storage tank (19) to the temperature below 15 °C while agitating them;
k) removing the water and/or the moisture from the beads using a centrifuge (20) and/or a dehumidifier (21); and
I) dehumidifying and/or drying the beads at the temperature below 30 °C in a hot-air drier (22) by use of hot-air.

## Patentansprüche

1. Vorrichtung zur Herstellung von geschäumten Styrolharzperlen mit
a) einem Vorpolymerisationsbad (14),
b) einem Hauptpolymerisationsbad (16) mit einer Heizeinrichtung und einer Umlaufwasserkühlein richtung,
c) einem Dispersionstank (12) mit Heiz- oder Kühleinrichtungen und mit Rühreinrichtungen stromaufwärts von und verbunden mit dem Hauptpolymerisationsbad (16),
d) einem Reinwassertank (10) mit Temperaturregeleinrichtungen stromaufwärts von und verbunden mit dem Dispersionstank (12) und dem Hauptpolymerisationsbad (16),
e) einem Styrolmonomertank (11) stromaufwärts von und verbunden mit dem Vorpolymerisationsbad (14) und dem Hauptpolymerisationsbad (16),
f) einem Schneckeförderreaktor (16), der zwischen dem Vorpolymerisationsbad (14) und dem Hauptpolymerisationsbad (16) angeordnet ist,
g) einem Treibmitteltank (13) stromaufwärts von und verbunden mit dem Hauptpolymerisationsbad (16),
h) einem mehrfach gewundenen Doppelleitungsumlaufkühler (17) stromabwärts von und verbunden mit dem Hauptpolymerisationsbad (16),
i) einer Trommelreinigungseinrichtung (18) mit einem motorgetriebenen Trommelsieb und mit einer Einspritzdüse stromabwärts von und verbunden mit dem mehrfach gewundenen Doppelleitungsumlaufkühler (17),
j) einem Schlammvorratsbehälter (19) mit einem Rührwerk stromabwärts von und verbunden mit dem Trommelsieb (18),
k) einer Zentrifuge (20) und/oder einem Entfeuchter (21) stromaufwärts eines Heißlufttrockners (22).

2. Vorrichtung zur Herstellung geschäumter Styrolharzperlen nach Anspruch 1, wobei die Heiz- oder Kühleinrichtung, mit welcher der Dispersionstank (12) ausgestattet ist, in solch einer Art und Weise konstruiert ist, daß eine Leitung wenigstens fünf mal entlang der Innenwand des Tanks herumläuft, wobei der Einlaß und der Auslaß an der Außenseite davon angeordnet sind, und welche die Gemische in dem Tank durch selektives Zuführen von Dampf oder von kaltem Wasser durch die Leitung heizen oder kuhlen kann.

3. Vorrichtung zur Herstellung von geschäumten Styrolharzperlen nach Anspruch 1, wobei der Umlaufkühler (17) einen Doppelleitungsaufbau hat, welcher Wärme zwischen der inneren Leitung und der äußeren Leitung austauschen kann, indem mehrere gerade Leitungen in der gleichen Richtung mit einem vorherbestimmten Abstand zueinander angeordnet sind, wobei ein Endabschnitt einer geraden Leitung mit einem Endabschnitt einer gerundeten Leitung, welche den gleichen Durchmesser hat, verbunden ist, der andere Endabschnitt der gerundeten Leitung wiederum mit einem Endabschnitt einer vorhergehenden geraden Leitung verbunden ist, während der andere Endabschnitt einer geraden Leitung mit einem Endabschnitt einer weiteren gerundeten Leitung, die auch den gleichen Durchmesser hat, verbunden ist, der andere Endabschnitt der gerundeten Leitung wiederum mit einem Endabschnitt einer nachfolgenden geraden Leitung verbunden ist, wobei die verschiedenen geraden Leitungen und die gerundeten Leitungen für eine Fluidverbindung miteinander verbunden sind und die jeweiligen geraden Leitungen schließlich von der entsprechenden Anzahl äußerer Leitungen, welche ebenfalls miteinander verbunden sind, umgeben sind, deren Durchmesser größer sind als diejenigen der inneren Leitungen.

4. Vorrichtung zur Herstellung geschäumter Styrolharzperlen nach Anspruch 1, wobei die Trommelreinigungseinrichtung (18) mehrere Schraubengebläse hat und das Trommelsieb aufweist, welches von einem Motor unter Führung einer Führungsrolle rotiert werden kann, mehrere Einspritzdüsen, welche das Reinwasser über dem Trommelsieb einspritzen, und einen Verschlußdeckel und einen Rahmen, der dies alles enthält und trägt, aufweist.

5. Verfahren zur Herstellung geschäumter Styrolharzperlen mit den Stufen, in denen man
a) Reinwasser auf etwa 70°C in einem Reinwassertank (10) erhitzt und das Wasser einem Dispersionstank (12) und einem Hauptpolymerisationsbad (16) zuführt,
b) eine bestimmte Menge Styrolmonomer aus einem Styrolmonomertank (11) einem Vorpolymerisationsbad (14) und einem Hauptpolymerisationsbad (16) zuführt,
c) ein Treibmittel aus einem Treibmitteltank (13) dem Hauptpolymerisationsbad (16) zuführt,
d) das Wasser und die Zusätze auf 70 bis 90°C erhitzt und sie in dem Dispersionstank (12) vormischt und das Gemisch in das Hauptpolymerisationsbad (16) einführt,
e) eine Menge an Styrolmonomer mit den Zusätzen in dem Vorpolymerisationsbad (14) ein erstes Mal bis zu der Umsetzungsrate von 5 - 10% polymerisiert,
f) die Reaktanten aus dem Vorpolymerisationsbad (14) in einem Schneckenförderreaktor (15), der zwischen dem Vorpolymerisationsbad (14) und dem Hauptpolymerisationsbad (16) angeordnet ist, ein zweites Mal bis zu der Umsetzungsrate von 7 - 20% polymerisiert,
g) das Wasser, die Zusätze und das Styrolmonomer aus dem Reinwassertank (10), dem Dispersionstank (12) bzw. dem Styrolmonomertank (11) und die vorpolymerisierten Reaktanten aus dem Schneckenförderreaktor (15) dem Hauptpolymerisationsbad (16) zuführt und sie miteinander bei 70 bis 90°C umsetzen läßt und sie nochmals bei 110 bis 135°C bis zu der Umsetzungsrate von 99,80% umsetzen läßt,
h) die umgesetzten Harzperlen aus dem Hauptpolymerisationsbad (16) in einem Umlaufkühler (17) bei einer Temperatur unterhalb von 20°C unter Verwendung von kaltem Wasser kühlt und altern läßt,
i) die Verunreinigungen, die an der Oberfläche der Harzperlen anhaften, in einer Trommelreinigungseinrichtung (18) mit Reinwasser, welches aus einer Einspritzdüse eingespritzt wird, auswäscht,
j) die gereinigten Harzperlen in einem Schlammvorratsbehälter (19) bei einer Temperatur unterhalb von 15°C lagert, während man sie rührt,
k) das Wasser und/oder die Feuchtigkeit aus den Perlen unter Verwendung einer Zentrifuge (20) und/oder eines Entfeuchters (21) entfernt und
l) die Perlen bei einer Temperatur unterhalb von 30°C in einem Heißlufttrockner (22) unter Verwendung von heißer Luft entfeuchtet und/oder trocknet.

## Revendications

1. Appareil pour produire des perles de résine de mousse en styrène, comprenant :
a) un bain de prépolymérisation (14) ;
b) un bain principal de polymérisation (16) comportant des moyens de chauffage et des moyens de refroidissement par eau de circulation ;
c) un réservoir de dispersion (12), comportant des moyens de chauffage ou de refroidissement et des moyens d'agitation, qui est relié au bain principal de polymérisation (16) et qui est disposé en amont ;
d) un réservoir d'eau pure (10) situé en amont comportant des moyens de contrôle de la température et qui est relié au réservoir de dispersion (12) et au bain principal de polymérisation (16) ;
e) un réservoir de styrène monomère (11) qui est relié au bain de prépolymérisation (14) et au bain principal de polymérisation (16), et qui est disposé en amont ;
f) un réacteur (15) d'alimentation à vis positionné entre le bain de prépolymérisation (14) et le bain principal de polymérisation (16) ;
g) un réservoir (13) d'agent de moussage qui est relié au bain principal de polymérisation (16) et qui est disposé en amont ;
h) un circulateur (17) de refroidissement à conduit double à courbures multiples qui est relié au bain principal de polymérisation (16) et qui est disposé en aval ;
i) un moyen de nettoyage à tambour (18), comportant un tamis de tambour motorisé et une buse d'injection, et qui est relié au circulateur (17) de refroidissement à conduit double à courbures multiples, et qui est disposé en aval ;
j) un réservoir (19) de stockage de boue comportant un agitateur qui est relié au tamis de tambour (18) et qui est disposé en aval ;
k) une centrifugeuse (20) et/ou un déshumidificateur (21) disposés en amont d'un sécheur à air chaud (22).

2. Appareil pour la production de perles de résine de mousse de styrène selon la revendication 1, dans lequel les moyens de chauffage ou de refroidissement qui équipent le réservoir de dispersion (12) sont construits de telle manière qu'un conduit tourne au moins cinq fois le long de la paroi intérieure du réservoir, l'entrée et la sortie étant positionnées à l'extérieur du réservoir, et que ces moyens sont susceptibles de chauffer ou de refroidir les mélanges contenus dans le réservoir en amenant de façon sélective de la vapeur ou de l'eau froide à travers le conduit.

3. Appareil pour la production de perles de résine de mousse de styrène selon la revendication 1, dans lequel le circulateur (17) de refroidissement comporte une structure de conduit double qui est susceptible d'échanger de la chaleur entre le conduit intérieur et le conduit extérieur en disposant plusieurs conduits linéaires dans la même direction à une distance prédéterminée les uns des autres, une partie d'extrémité d'un conduit linéaire étant reliée à une partie d'extrémité d'un conduit courbé ayant le même diamètre, l'autre partie d'extrémité du conduit courbé étant à nouveau reliée à une partie d'extrémité d'un conduit linéaire précédent, tandis que l'autre partie d'extrémité d'un conduit linéaire est reliée à une partie d'extrémité d'un autre conduit courbé ayant également le même diamètre, l'autre partie d'extrémité du conduit courbé étant à nouveau reliée à une partied'extrémité d'un conduit linéaire ultérieur, grâce à quoi les divers conduits linéaires précités et lesdits conduits courbés sont reliés pour permettre la communication d'un fluide, et les conduits linéaires respectifs sont finalement entourés par le nombre correspondant de conduits extérieurs qui sont également reliés les uns aux autres, leur diamètre étant plus grand que celui des conduits intérieurs.

4. Appareil pour la production de perles de résine de mousse de styrène selon la revendication 1, dans lequel le moyen de nettoyage à tambour (18) comporte plusieurs pales en hélice, et comporte le tamis à tambour qui est susceptible d'être entraîné en rotation par un moteur, en étant guidé par un galet de guidage ; diverses buses d'injection injectant de l'eau pure par-dessus ledit tamis à tambour et un couvercle d'étanchéité et un bâti contenant et supportant le tout

5. Procédé pour la production de perles de résine de mousse de styrène comprenant les étapes consistant à
a) chauffer de l'eau pure jusqu'à environ 70°C dans un réservoir d'eau pure (10) et fournir de l'eau à un réservoir de dispersion (12) et à un bain principal (16) de polymérisation ;
b) fournir une certaine quantité d'un styrène monomère à partir d'un réservoir (11) de styrène monomère à un bain de prépolymérisation (14) et à un bain principal de polymérisation (16) ;
c) fournir un agent de moussage à partir d'un réservoir (13) d'agent de moussage au bain principal (16) de polymérisation ;
d) chauffer l'eau et les additifs jusqu'à 70 - 90°C et les mélanger préalablement dans le réservoir de dispersion (12), et introduire le mélange dans le bain principal de polymérisation (16) ;
e) polymériser une quantité de styrène monomère avec les additifs dans le bain (14) de prépolymérisation pour la première fois jusqu'à un rapport de conversion de 5-10% ;
f) polymériser les produits de la réaction à partir du bain de prépolymérisation (14) dans un réacteur d'alimentation à vis (15) positionné entre le bain (14) de prépolymérisation et le bain principal (16) de polymérisation pour une seconde fois jusqu'à un rapport de conversion de 7-20% ;
g) fournir l'eau, les additifs et le styrène monomère depuis le réservoir d'eau pure (10), le réservoir de dispersion (12) et le réservoir (11) de styrène monomère, respectivement, et les produits de la réaction prépolymérisés provenant du réacteur (15) d'alimentation à vis au bain principal (16) de polymérisation et en les faisant réagir entre eux à 70-90°C et en les faisant réagir à nouveau à 110-135°C jusqu'à un rapport de conversion de 99,80% ;
h) refroidir et laisser vieillir les perles de résine de la réaction provenant du bain principal de polymérisation (16) dans un circulateur (17) de refroidissement à une température inférieure à 20°C en utilisant de l'eau froide ;
i) éliminer par lavage les impuretés fixées sur la surface des perles de résine dans un moyen de nettoyage à tambour (18) avec de l'eau pure injectée à partir d'une buse d'injection ;
j) stocker les perles de résine nettoyées dans un réservoir de stockage de boue (19) à une température inférieure à 15°C tout en agitant ;
k) éliminer l'eau et/ou l'humidité des perles en utilisant une centrifugeuse (20) et/ou un déshumidificateur (21) ; et
l) déshumidifier et/ou sécher les perles à une température inférieure à 30°C dans un sécheur à air chaud (22) en utilisant de l'air chaud.
